Europäisches Patentamt

European Patent Office

Office européen des brevets

(11) Veröffentlichungsnummer: **0 281 866 B1**

(12) **EUROPÄISCHE PATENTSCHRIFT**

(45) Veröffentlichungstag der Patentschrift: **04.11.92**

(21) Anmeldenummer: **88102810.4**

(22) Anmeldetag: **25.02.88**

(51) Int. Cl.⁵: **A47J 37/04**

(54) **Grillvorrichtung.**

(30) Priorität: **06.03.87 CH 837/87**

(43) Veröffentlichungstag der Anmeldung:
**14.09.88 Patentblatt 88/37**

(45) Bekanntmachung des Hinweises auf die
Patenterteilung:
**04.11.92 Patentblatt 92/45**

(84) Benannte Vertragsstaaten:
**AT CH DE FR LI NL SE**

(56) Entgegenhaltungen:
FR-A- 2 561 896        GB-A- 857 216
US-A- 2 049 481        US-A- 3 221 638
US-A- 3 339 477        US-A- 4 211 159

(73) Patentinhaber: **Zobrist, Ernst**
**Seestrasse 9**
**CH-3855 Brienz(CH)**

(72) Erfinder: **Zobrist, Ernst**
**Seestrasse 9**
**CH-3855 Brienz(CH)**

(74) Vertreter: **Keller, René, Dr. et al**
**Patentanwälte Dr. René Keller & Partner**
**Postfach 12**
**CH-3000 Bern 7(CH)**

## Beschreibung

Die Erfindung bezieht sich auf eine Grillvorrichtung der im Oberbegriff des Patentanspruchs 1 angegebenen Gattung.

Eine Vorrichtung dieser Gattung ist aus der FR-A 2 561 896 bekannt. Sie ist zur Verwendung in einem Kamin bestimmt. Bei dieser bekannten Vorrichtung trägt das Gestell an seiner höchsten Stelle eine Aufnahme für einen Antriebsmotor mit vertikaler Welle. Am unteren Ende der Welle ist ein Haken gebildet, an den der an seinem oberen Ende mit einer Oese versehene als Bratspiess ausgeführte Träger für das zu grillierende Gut gehängt wird. Das Gestell besteht aus einem halbkreisförmigen, der Schale angepassten Basisteil mit drei Füssen. An den Basisteil sind die Enden der Schenkel eines im wesentlichen umgekehrt V-förmigen, aufrechten Ständers befestigt, auf dessen Scheitelbereich die Aufnahme für den Antriebsmotor angeordnet ist.

Bei der bekannten Vorrichtung muss der Abstand des Hakens von der Schale grösser als die grösste vorkommende, beim Grillieren vertikale Abmessung des zu grillierenden Gutes sein. Deshalb ist das Gestell mit dem Motor verhältnismässig hoch, so dass die Vorrichtung verhältnismässig viel Raum zum Aufbewahren bei Nichtgebrauch beansprucht und daher auch nicht dazu geeignet ist, zur Verwendung im Freien (Picknick, Camping) mitgenommen zu werden. Nachteilig ist auch, dass der Antriebsmotor oben koaxial zur Drehachse des zu grillierenden Gutes angeordnet und damit der Hitze des Feuers nicht viel weniger ausgesetzt ist als das Gut. Auch ist die für ein gleichmässiges Grillieren erwünschte, zentrische Lage des zu grillierenden Gutes relativ zu der Drehachse kaum erreichbar, denn der Bratspiess hängt in aller Regel schräg an dem Haken, nämlich so, dass der Schwerpunkt des Gutes mit dem Bratspiess vertikal unter dem Haken ist. Der Schwerpunkt des Gutes mit dem Bratspiess ist aber nicht immer in der Mitte des Gutes, z. B. wenn dasselbe einen grösseren Knochen enthält. Auch ist es, insbesondere wegen der kleinen und zur Drehachse unsymmetrischen Unterstützungsfläche des hohen Gestells unerwünscht, dass der Bratspiess mit dem grilliert werdenden Gut hin und her pendeln kann.

Hier will die Erfindung Abhilfe schaffen. Durch die Erfindung, wie sie im Patentanspruch 1 gekennzeichnet ist, wird die Aufgabe gelöst, eine neben einem Feuer aufzustellende Grillvorrichtung zu schaffen, die bei Nichtgebrauch weniger Raum beansprucht und daher leicht zur Verwendung im Freien (Picknick, Camping) mitgenommen werden kann, deren Antriebsmotor der Hitze des Feuers weniger ausgesetzt ist, und bei deren Verwendung das Gut beim Grillieren in einer wählbaren, von der Lage seines Schwerpunkts unabhängigen Stellung bleibt.

Die durch die Erfindung erzielten Vorteile sind im wesentlichen darin zu sehen, dass die Vorrichtung, wenn die Stäbe aus den Löchern des Trägers herausgezogen sind, eine geringe Höhe hat, die dem Abstand der untersten Stelle des Antriebsgliedes von der Oberfläche des Halters für die Stäbe, vergrössert durch einen Sicherheitsabstand des Antriebsgliedes von der Unterstützungsfläche auf der die Vorrichtung steht, entspricht. Das Gestell dieser Höhe nimmt nur einen flachen Raum ein und kann zusammen mit den Stäben in einem flachen Behälter ins Freie mitgenommen werden. Da die Antriebswelle des Getriebes wesentlich horizontal verläuft, kann der Antriebsmotor an der dem Feuer abgewandten Seite des Gestells angeordnet werden, wo er der Hitze des Feuers kaum ausgesetzt ist, zumal die Antriebswelle in einer geringen Höhe über dem Boden, auf dem die Vorrichtung steht, ist, wo Frischluft zum Feuer strömt. Mittels der Stäbe, die in zur Anpassung an die Abmessungen des zu grillierenden Gutes wählbare Löcher des Halters gesteckt werden, kann das zu grillierende Gut, das in der Regel unregelmässig geformt ist, besser in die zum Grillieren günstigste Lage relativ zur Drehachse gebracht werden, insbesondere so, dass die verschiedenen Seiten des Gutes möglichst gleiche Abstände von der Drehachse und damit beim Drehen möglichst gleiche Abstände vom Feuer haben. Am Gestell verstellbare Beine, die zum Aufbewahren oder Transportieren der Vorrichtung an das Gestell heran geschwenkt werden können, ermöglichen es, die Achse, um die der Träger im Betrieb rotiert, in einer wählbaren Richtung um einen wählbaren spitzen Winkel zur Vertikalen zu neigen. Diese Beine sind an der dem Feuer beim Gebrauch der Vorrichtung abgewandten Seite des Gestells vorgesehen, so dass auch während des Grillierens die Verteilung der Wärmestrahlung auf das Gut verändert werden kann.

Aus der US-A 4,211,159 ist eine Grillvorrichtung mit zwei ebenfalls vertikal hängenden Bratspiessen bekannt, die aber gattungsmässig anders, nämlich nicht neben ein Feuer sondern auf den Tisch zu stellen und dafür mit zwei Feuerkammern für Holzkohle ausgerüstet ist, deren jede einem der Bratspiesse zugewandte, perforierte Seitenwand hat. Jeder Bratspiess hängt an einem um eine vertikale Achse frei drehbaren Haken und ist unten durch eine lösbare Steckkupplung drehfest mit einer von zwei drehbar gelagerten Schalen verbunden, die von einem Motor mittels eines Kettentriebes antreibbar sind. Das aus Rohren zusammengesetzte Gestell hat zwei vertikale Säulen, die oben und unten an den freien Enden zweier V-förmig angeordneter Streben befestigt sind. Die unteren Streben tragen je ein Drehlager für eine der Schalen, die oberen tragen je ein Drehlager für einen der Haken. Am V-Scheitel der unteren Streben ist der Motor angeordnet. Vom V-Scheitel der oberen Streben geht ein Gestellglied vertikal nach unten und trägt an seinem freien Ende einen wärmeisolierten Griff zum Tragen der Vorrichtung. Die vertikal langgestreckten Feuerkammern mit schmalem Querschnitt sind an den beiden Säulen befestigt und erstrecken fast im ganzen Höhenbereich zwischen den Haken und den Schalen. Wenn die Vorrichtung auf einem Tisch steht, liegen die unteren Schenkel auf der Tischplatte. An den Säulen des Gestells kann eine Verlängerung nach unten befestigt werden, mit der das Gestell auf den Boden gestellt werden kann, wobei die unteren Streben jedenfalls auf Tischhöhe kommen. Bei dieser gattungsmässig anderen Grillvorrichtung ist der Motor der Wärmestrahlung des Feuers zwar weniger ausgesetzt als bei der erstgenannten (FR-A 2 561 896), im übrigen ist jedoch auch bei ihr die vorstehend angegebene Aufgabe der Erfindung nicht gelöst, denn sie benötigt auch bei Nichtgebrauch viel Raum und ist daher nicht dazu geeignet, zur Verwendung im Freien (Picknick, Camping) mitgenommen zu werden, und das Gut kann an den Bratspiessen, z. B. wenn es einen zentralen Knochen enthält, nicht in der zum Grillieren günstigsten Lage zur Drehachse gehalten werden. Auch ist diese Vorrichtung schwer und nicht preisgünstig herstellbar, und sie hat nicht die durch die Erfindung erzielten Vorteile.

Weitere vorteilhafte Ausgestaltungen der Erfindung sind Gegenstand der Ansprüche 2-10.

Im folgenden wird die Erfindung anhand lediglich einen Ausführungsweg darstellender Zeichnungen näher erläutert. Es zeigen

Fig. 1 eine Seitenansicht einer erfindungsgemässen Grilliervorrichtung,

Fig. 2 eine schräge Draufsicht in Blickrichtung II in Fig. 1

Fig. 3 eine schräge Voransicht in Blickrichtung III in Fig. 1 und 2,

Fig. 4 eine Untersicht einer Einzelheit in Blickrichtung IV von Fig. 1, in grösserem Massstab,

Fig. 5 einen teilweisen Schnitt nach der Linie V-V in Fig. 2,

Fig. 6 eine Seitenansicht einer Variante der Grillvorrichtung.

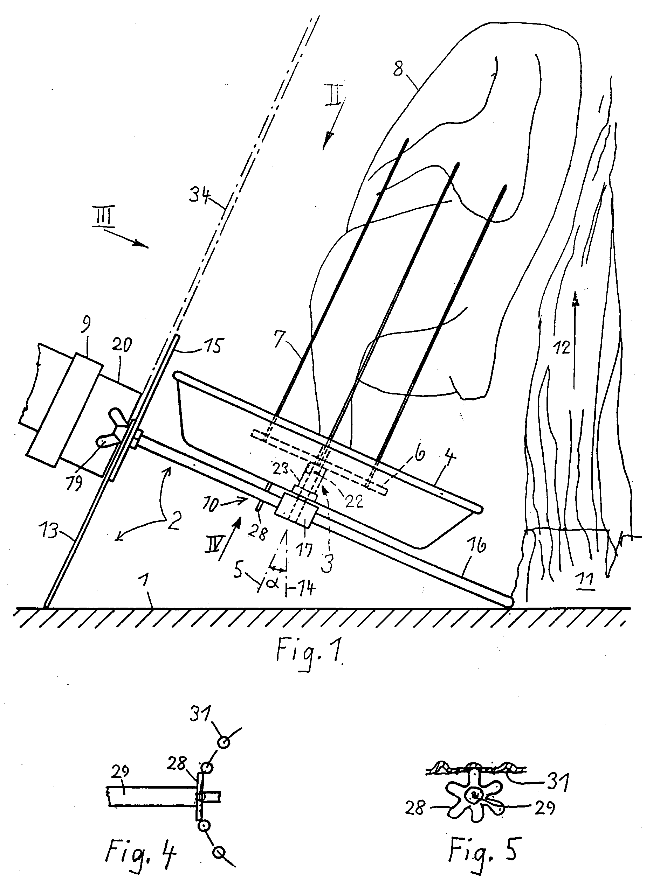

Die in Fig. 1-3 dargestellte Grillvorrichtung besteht in ihrem grundsätzlichen Aufbau aus einem auf einer horizontalen Unterlage 1 stehenden Gestell 2, das ein Drehlager 3 für eine Schale 4 trägt, wobei die Drehachse 5 des Lagers 3 um einen spitzen Winkel alpha zur Vertikalen 14 geneigt ist, einem in der Schale 4 befestigten Halter 6 für einen Träger 7 für das zu grillierende Gut 8 und einem vom Gestell 2 getragenen Motor 9, der ein Getriebe 10 zum Drehen der Schale 4 mit dem Träger 7 antreibt.

Die Unterlage 1 ist beim Grillieren in einem Cheminée dessen Feuerraumboden, und kann beim Grillieren im Freien der Erdboden sein, wobei Unebenheiten desselben durch Verstellen der beiden Beine 13 des Gestells 2 ausgeglichen werden können, wie weiter unten erwähnt. Die Vorrichtung ist zweckmässig so neben dem Feuer 11 aufzustellen, dass die Drehachse 5 zum Feuer hin geneigt ist, wobei der Abstand des zu grillierenden Gutes 8 von der vom Feuer 11 aufsteigenden Wärmeströmung (Pfeil 12) von unten nach oben abnimmt.

Das Gestell 2 hat eine Frontplatte 15, die auch als Wärmeschutzschild für den Motor 9 dient. An der Rückseite der Frontplatte 15 ist eine durch zwei zur Frontplatte 15 senkrechte Stäbe 16 gebildete Stütze befestigt, deren freies Ende auf dem Boden 1 abgestützt ist. Statt aus zwei Stäben 16 könnte diese Stütze auch aus einem U-förmig gebogenen Stab bestehen, dessen Biegung das freie Ende der Stütze bildet. Die Stäbe 16 sind in einem mittleren Bereich ihrer Länge durch eine Traverse 17 miteinander verbunden, die das Drehlager 3 für die Schale 4 mit dem Träger 7 für das zu grillierende Gut 8 trägt. Die beiden, als Laschen ausgeführten Beine 13 sind je mittels eines Gewindebolzens drehbar an der Frontplatte 15 gelagert und mit einer Flügelmutter 19 in ihrer Lage fixierbar. Dazu könnten die Löcher in den Beinen 13 (anders als gezeichnet) auch Langlöcher sein. Durch Verstellen der Beine 13 kann der Abstand der Frontplatte 15 von der Unterlage 1 und damit der Neigungswinkel alpha der Drehachse 5 verändert, durch unterschiedliche Beinstellungen können dabei Unebenheiten der Unterlage 1 ausgeglichen und auch eine Neigung der Drehachse 5 in der zur Ebene des Winkls alpha senkrechten Ebene erzielt werden. An der Vorderseite der Frontplatte 15 ist ein Bügel 20 befestigt, der den Motor 9 in einem Abstand vor der Frontplatte 15 hält.

An der Traverse 17 ist ein Achszapfen 22 befestigt, auf dem eine fest und dicht im Boden der Schale 4 sitzende Hülse 23 drehbar und axial abziehbar gelagert ist. Mit dem oberen Ende der Hülse 23 ist eine den Halter 6 für den Träger 7 für das zu grillierende Gut 8 bildende, kreuzförmige Platte 24 drehfest aber lösbar verbunden. Dazu hat die Platte 24 eine mittlere, durchgehende Bohrung, mit der sie auf den Achszapfen 22 gesteckt ist, und einen Stift 25 der an einer von zwei Abflachungen 26 der Hülse 23 anliegt. Zwischen den Armen der kreuzförmigen Platte 24 kann vom grilliert werdenden Gut herabtropfendes Fett in die Schale 4 fallen. Die Lösbarkeit der Platte 24 von der Hülse 23 und die Lösbarkeit der schale 4 vom Achszapfen 22, auf den die Hülse 23 gesteckt ist, sind für das Reinigen der Grillvorrichtung nach Gebrauch wesentlich. Die Platte 24 hat mehrere Löchen 27, die auf zur Drehachse 3 konzentrischen Kreisen angeordnet sind. der Träger 7 besteht aus mehreren, beispielsweise vier Stäben, die in entsprechend der Grösse des Gutes 8 ausgesählte Löcher 27 gesteckt und an ihren oberen Enden durch einen nicht dargestellten Ring zusammengehalten werden, um das Gut 8 allseitig zu stützen. Die den Träger 7 bildenden Stäbe sind zweckmässig an einem Ende zwecks bequemer Handhabung zu einer Oese gebogen und am anderen Ende spitz, so dass sie auch durch Randpartien des zu grillierenden Gutes 8 hindurchgeschoben werden können und in den Löchern 27 durch Keilwirkung halten und aus denen sie nach Gebrauch einfach herausgezogen und nach Gebrauch gereinigt werden können.

Das Getriebe 10 hat ein als Sprossenrad 28 ausgebildetes Antriebsrad, das auf einer Antriebswelle 29 sitzt, deren eines Ende in der Traverse 17 gelagert und deren anderes Ende drehfest in einer (nicht dargestellten) Kupplung der Antriebswelle des Motors 9 steckt. Die Welle 29 ist durch ein Loch der Frontplatte und ein Loch 30 des Bügels 20 hindurchgeführt. Dem Sprossenrad 28 ist ein Kranz Vertiefungen 31 am Boden der Schale 4 zugeordnet. Dabei sind die Sprossen des Sprossenrades 28 und die Vertiefungen derart ausgebildet, dass jede in eine Vertiefung 31 greifende Sprosse die Schale 4 anhebt und beim Verlassen der Vertiefung wieder fallen lässt, so dass die Schale 4 und damit auch das zu grillierende Gut 8 bei ihrer bzw. seiner Drehung vibriert wird.

Der Motor 10 kann ein für Grillvorrichtungen handelsüblicher Getriebemotor mit auswechselbar eingebauter Batterie sein.

Ein zusätzlicher, in Fig. 1 strichpunktiert angedeuteter Wärmeschutzschirm 34, der an der Frontplatte 15 nach oben vorsteht, kann vorgesehen werden, um auf ihn treffende Wärme an das zu grillierende Gut 8 zurück zu reflektieren und bei Verwendung des Geräts im Freien auch als Windschutz zu dienen. Ein solcher Wärmeschutzschirm 34 kann hinreichend steif und mit geringem Gewicht kostengünstig aus einem mit einer Metallfolie, zweckmässig Aluminiumfolie, verkleideten Drahtgitter bestehen und an seinem unteren Rand in einen Zwischenraum 35, der zwischen der Frontplatte 15 und den Enden des Bügels 20 gebildet ist, geschoben werden. Dazu kann der Wärmeschutzschirm an seinem unteren Rand zwei (nicht dargestellte) Schlitze haben, mit denen er auf die an der Vorderseite der Frontplatte 15 vorstehenden, zum Befestigen des Bügels 20 dienenden Enden der Stäbe 16 zu stecken ist. Der wärmereflektierende Schutzschirm 34 kann auch aus einem Chromstahlblech bestehen. Vorzugsweise wird der Schutzschirm als Hohlspiegel, z.B. als Parabolspiegel ausgebildet, damit möglichst die gesamte auf den Spiegel auftreffende Wärmestrahlung auf das zu grillierende Gut reflektiert wird.

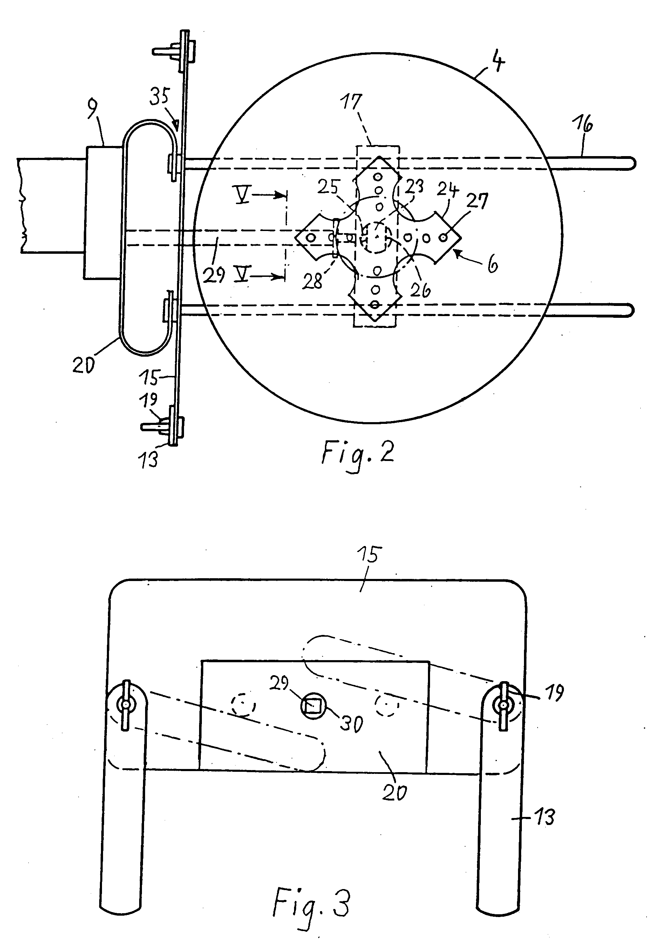

Zur Aufbewahrung und zum Transport der Grillvorrichtung werden die Beine 13 nach Lösen der Flügelmuttern 19 in die in Fig. 3 strichpunktiert gezeichnete Lage geschwenkt. Die nach dem Grillieren zur Entnahme des grillierten Gutes bereits aus dem Halter 6 herausgezogenen den Träger 7 bildenden Stäbe werden parallel zu der Stütze 16 neben oder auf das Gestell 2 gelegt. Der Motor 9 kann an der der Frontplatte 15 abgewandten Seite der Schale 4 abgelegt werden. Der Wärmeschutzschild 34 hat zweckmässig die Abmessungen eines rechteckigen Umrisses des so zerlegten Gerätes und wird unter oder auf dasselbe gelegt. Dabei nimmt das Ganze einen verhältnismässig kleinen Raum ein.

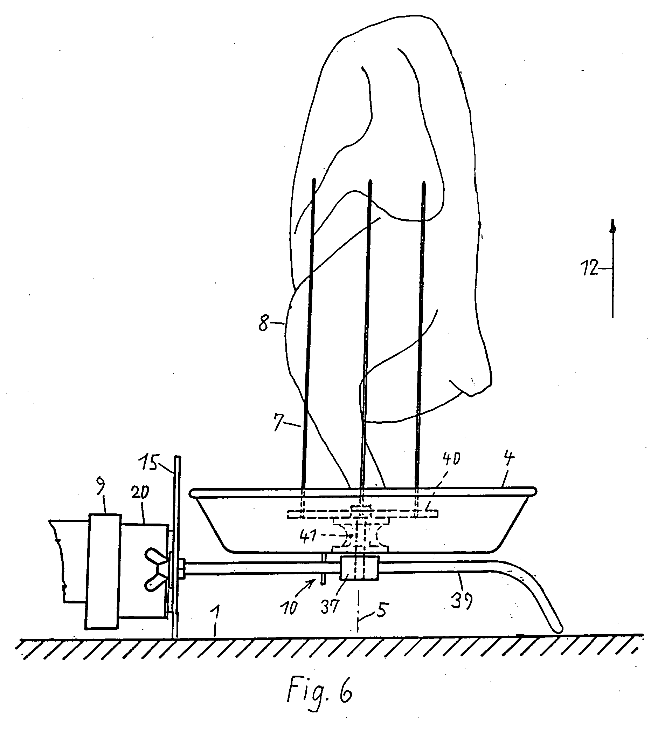

Die in Fig. 6 dargestellte Variante der oben beschriebenen Grillvorrichtung unterscheidet sich von der aus Fig. 1-5 ersichtlichen im wesentlichen dadurch, dass die Stäbe 39, die im übrigen den Stäben 16 in Fig. 1 und 2 entsprechen und wie diese durch einen U-förmig gebogenen Stab mit der Biegung am freien Ende ersetzt werden können, am freien Ende nach unten gebogen sind, so dass die Drehachse 5 vertikal ist, wenn das Gestell mit der Frontplatte 15 unmittelbar auf die Unterlage 1 gestellt wird, wozu die Beine 13 in die in Fig. 3 strichpunktierte gezeichnete Lage zu stellen sind. Im übrigen kann mit der Grillvorrichtung nach Fig. 6 ebenso wie oben beschrieben eine einstellbare Neigung der Drehachse 5 zur Vertikalen erzielt werden. Weiterhin unterscheidet sich die Variante nach Fig. 6 von der im Zusammenhang mit Fig. 1-3 beschriebenen noch dadurch, dass die Platte 40, die im übrigen der Platte 24 in Fig. 1 und 2 entspricht, auf einen Gewindeansatz der der Hülse 23 entsprechenden Hülse 41 lösbar festgeschraubt ist.

Um bei gegebener Dicke der Platte 24 längere Löcher 27 für die Stäbe 7 zu ermöglichen, können am Plattenrand Lappen gebildet, rechtwinklig oder - wie im folgenden erläutert - um z. B. 85° abgebogen und die Löcher in den Lappen parallel zu deren Oberfläche gebohrt werden. Zu diesem Zwecke könnten auch etwa U-förmig umgebogene Lappen vorgesehen und die Löcher durch beide U-Schenkel gebohrt werden.

Die Löcher 27 können abweichend von der Zeichnung auch so ausgeführt werden, dass sie die Stäbe 7 verschiebbar halten, wobei die Stäbe sich dann auf dem Boden der Schale 4 abstützen.

Die Löcher 27 können abweichend vom gezeichneten Ausführungsbeispiel auch schräg, z. B. in einem Winkel von 5°, zur Achse 5 verlaufen. Dadurch wird erreicht, dass die Stäbe 7 - je nachdem, welche Seite der lösbar mit der Hülse 41 verbundenen Platte 24 oben ist - nach oben konvergieren, um kleineres Bratgut 8 aufzunehmen, oder nach oben divergieren, um grösseres Bratgut aufzunehmen, wobei auch eine das Bratgut in bezug auf die Achse 5 zentrierende Wirkung erzielt wird, weil das Bratgut 8 bestrebt ist, an den Stäben 7 abwärts zu gleiten, wozu die Drehung und Vibration beitragen. Für diese Anpassungsmöglichkeit an das Bratgut 8 genügen Löcher 27 auf einem zur Achse 5 konzentrischen Kreis. Wenn Löcher 27 an zur Anpassung an das Bratgut wählbaren Kreisen verschiedener Durchmesser vorgesehen sind (Fig. 2), sollten jeweils nur Löcher ein und desselben dieser Kreise verwendet werden, um eine exzentrische Lage des Bratgutes 8 zu vermeiden.

**Patentansprüche**

1. Neben einem Feuer aufzustellende Grillvorrichtung, bei der ein Träger (7) für das zu grillierende Gut (8) an einem Gestell (15, 16, 17) über einer Schale (4) für vom grilliert werdenden Gut (8) abtropfendes Fett um eine zur Schale (4) senkrechte Achse (5) drehbar ist, dadurch gekennzeichnet, dass unmittelbar über der Schale (4) ein fest oder drehfest aber lösbar mit der Schale (4) verbundener Halter (6) für den Träger bildende Stäbe (7) angeordnet ist, die in zur Anpassung an die Abmessungen des Gutes (8) wählbare Löcher (27) des Halters (6) zu stecken sind, und dass das Antriebsglied (28) eines Getriebes (10) mit zur Schale (4) paralleler Antriebswelle (29) mit auf einem Kreis am Boden der Schale (4) angeordneten Ausbuchtungen (31) kämmt.

2. Vorrichtung nach Anspruch 1, dadurch gekennzeichnet, dass das Gestell (15, 16, 17) eine dem Feuer abgewandt abzustützende, mit einem Durchgangsloch für die Antriebswelle (29) des Getriebes (10) versehene Platte (15) hat, an der eine Stütze (16, 17) freiträgerartig vorsteht, deren freies Ende dem Feuer (11) zugewandt auf dem Boden (1) abzustützen ist, und dass die Schale (4) drehbar an der Stütze (16, 17) gelagert ist.

3. Vorrichtung nach Anspruch 2, dadurch gekennzeichnet, dass die Schale (4) lösbar an der Stütze (16, 17) gelagert ist.

4. Vorrichtung nach Anspruch 2 oder 3, dadurch gekennzeichnet, dass die Stütze (16, 17) zwei im wesentlichen stabförmige Teile (16) aufweist, die durch eine Traverse (17) miteinander verbunden sind, an welcher die Schale (4) mit dem Träger (6, 7) gelagert ist.

5. Vorrichtung nach einem der Ansprüche 1 bis 4, gekennzeichnet durch wenigstens ein am Gestell (15, 16, 17) verstellbares und fixierbares Bein (13).

6. Vorrichtung nach den Ansprüchen 2 und 5, dadurch gekennzeichnet, dass zwei aus Flachmaterial hergestellte Beine (13) schwenkbar an der Platte (15) des Gestells (15, 16, 17) befestigt sind.

7. Vorrichtung nach einem der Ansprüche 1 bis 6, dadurch gekennzeichnet, dass die Schale (4) an dem Gestell (15, 16, 17) axial verschiebbar gelagert ist, und dass der Abstand der Antriebswelle (29) von der Schale (4) und die Ausbuchtungen (31) am Boden der Schale (4) so bemessen sind, dass das Antriebsglied (28) die Schale (4) mit dem Träger (6, 7) beim Kämmen mit den Vertiefungen (31) periodisch hebt.

8. Vorrichtung nach einem der Ansprüche 1 bis 7, gekennzeichnet durch einen Wärmeschirm (34), der an der dem Feuer (11) abgewandt abzustützenden Seite (15) des Gestells (15, 16, 17) anbringbar ist, um die auf ihn treffende Wärmestrahlung an das zu grillierende Gut (8) zu reflektieren.

9. Vorrichtung nach Anspruch 8, dadurch gekennzeichnet, dass der Wärmeschirm (34) aus einem Drahtgitter besteht, das mit einer Metallfolie verkleidet ist.

10. Vorrichtung nach einem der Ansprüche 1 bis 9, dadurch gekennzeichnet, dass die Löcher (27) des Halters (6) für die Stäbe (7) auf einem oder mehreren konzentrischen Kreisen angeordnet und/oder zur Drehachse (5) geneigt sind.

**Claims**

1. Grill device which is to be erected adjacent a fire and in the case of which a carrier 7 for the material 8 to be grilled is rotatable about an axis 5 perpendicular to the dish 4 on a frame 15, 16, 17 over a dish 4 for fat dripping off the material 8 which is being grilled , characterised in that directly above the dish 4 there is disposed a mounting 6, for rods 7 forming the carrier, which mounting is connected in a fixed or rotationally rigid but detachable manner to the dish 4 which rods 7 are to be inserted in selectable holes 27 in the mounting 6 for adaptation to the dimensions of the material 8; and in that the drive member 28 of a gearing 10 with a drive shaft 29 parallel to the dish 4 meshes with recesses 31 disposed in a circle on the base of the dish 4.

2. Device according to Claim 1, to be characterised in that the frame 15, 16, 17 has a plate 15 which is to be supported in a manner such that it is turned away from the fire, is provided with a passage aperture for the drive shaft 29 of the gearing 10, and at which a support 16, 17 projects in a cantilevered manner, of which the free end is to be supported on the ground 1 in a manner such that it faces the fire 11; and in that the dish 4 is rotatably mounted on the support 16, 17.

3. Device according to Claim 2, characterised in that the dish 4 is detachably mounted on the support 16, 17.

4. Device according to Claim 2 or 3, characterised in that the support 16, 17 comprises two essentially rod-shaped parts 16 which are connected to one another by means of a cross-spiece 17 on which the dish 4 is mounted with the carrier 6, 7.

5. Device according to one of Claims 1 to 4, characterised by at least one leg 13 which can be adjusted and secured on the frame 15, 16, 17.

6. Device according to Claims 2 and 5, characterised in that two legs 13, produced from flat material, are pivotably secured on the plate 15 of the frame 15, 16, 17.

7. Device according to one of Claims 1 to 6, characterised in that the dish 4 is mounted so as to be axially displaceable on the frame 15, 16, 17; and in that the distance between the drive shaft 29 and the dish 4 and the recesses 31 on the base of the dish 4 are dimensioned in such a way that the drive member 28 periodically lifts the dish 4 with the carrier 6, 7 when meshing with the recesses 31.

8. Device according to one of Claims 1 to 7, characterised by a heat shield 34 which can be attached to the side 15, of the frame 15, 16, 17, to be supported such that it faces away from the fire, in order to reflect the heat rays impinging thereon onto the material 8 to be grilled.

9. Device according to Claim 8, characterised in that the heat shield 34 consists of a wire grating which is coated with a metal foil.

10. Device according to one of Claims 1 to 9, characterised in that the holes 27 in the mounting 6 for the rods 7 are disposed over one or a plurality of concentric circles and/or are inclined with respect to the axis of rotation 5.

**Revendications**

1. Dispositif de grill à monter près d'un feu, dans lequel un support (7) destiné à la pièce à griller (8) peut tourner sur un bâti (15, 16, 17), au moyen d'un bol (4) destiné à la graisse qui dégoutte de la matière en train d'être grillée (8), autour d'un axe (5) perpendiculaire au bol (4), caractérisé en ce que, immédiatement au-dessus du bol (4), en étant relié au bol (4) de façon fixe ou fixe en rotation mais libérable, est placé un dispositif de maintien (6) pour des barreaux (7) qui constituent le support, qui doivent être enfoncés dans des trous (27) du dispositif de maintien (6) peuvent être choisis en vue d'une adaptation aux dimensions de la pièce (8), et en ce que l'organe d'entraînement (28) d'une transmission (10), dont l'arbre d'entraînement (29) est parallèle au bol (4), s'engrène avec des indentations (31) disposées sur un cercle au fond du bol (4).

2. Dispositif selon la revendication 1, caractérisé en ce que le bâti (15, 16, 17) comporte une plaque (15) à monter pour qu'elle soit opposée au feu, comportant un trou traversant pour l'arbre d'entraînement (29) de transmission (10), un support (16, 17) étant en surplomb en porte-à-faux sur cette plaque et l'extrémité libre de ce support devant s'appuyer sur le fond (1) en étant tournée vers le feu (11) et en ce que le bol (4) est logé à rotation sur le support (16, 17).

3. Dispositif selon la revendication 2, caractérisé en ce que le bol (4) est logé sur l'appui (16, 17) en pouvant être libéré.

4. Dispositif selon la revendication 2 ou 3, caractérisé en ce que l'appui (16, 17) présente deux parties sensiblement en forme de barreau (16), qui sont reliées entre elles par une traverse (17) sur laquelle est logé le bol (4) ainsi que le support (6, 7).

5. Dispositif selon l'une des revendications 1 à 4, caractérisé par au moins une patte (13) qui peut être déplacée et fixée sur le bâti (15, 16, 17).

6. Dispositif selon les revendications 2 et 5, caractérisé en ce que deux pattes (13) en produit plat sont fixées à pivotement sur la plaque (15) du bâti (15, 16, 17).

7. Dispositif selon l'une des revendications 1 à 6, caractérisé en ce que le bol (4) est logé en pouvant se déplacer axialement sur le bâti (15, 16, 17) et en ce que la distance entre l'arbre d'entraînement (29) et le bol (4), ainsi que les indentations (31) sur le fond du bol (4), sont dimensionnés de telle façon que l'organe d'entraînement (28) élève périodiquement le bol (4) ainsi que le support (6, 7) lors d'un engrènement avec les évidements (31).

8. Dispositif selon l'une des revendications 1 à 7, caractérisé par un écran thermique (34) que peut être disposé sur le côté (15), à monter en opposition au feu (11), du bâti (15, 16, 17), pour réfléchir sur la pièce à griller (8) le rayonnement thermique qui lui parvient.

9. Dispositif selon la revendication 8, caractérisé en ce que l'écran thermique (34) est constitué d'une grille en fil métallique, qui est revêtue d'une feuille métallique.

10. Dispositif selon l'une des revendications 1 à 9, caractérisé en ce que les trous (27) du dispositif de maintien (6) des barreaux (7) sont ménagés sur un ou plusieurs cercles concentriques et/ou sont inclinés par rapport à l'axe (5).

Fig. 1

Fig. 4

Fig. 5

Fig. 2

Fig. 3

Fig. 6